# EUROPEAN PATENT APPLICATION

(11) **EP 2 025 229 A1**
(43) Date of publication of application: **18.02.2009**
(21) Application number: 07767016.4
(22) Date of filing: 28.05.2007
(51) Int. Cl.: A01N 51/00, A01N 25/28, A01P 7/04

(54) **MICROCAPSULE**

(30) Priority: 01.06.2006 JP 2006153745
(71) Applicant: Sumika Enviro-Science Co., Ltd., Nishinomiya-shi Hyogo (JP); Bayer CropScience K.K., Tokyo 100-8262 (JP)
(72) Inventor: KANAYAMA, Ryuichi, Nishinomiya-shi, Hyogo 663-8242 (JP)
(74) Representative: Vossius & Partner
(86) International application number: PCT/JP2007/061235
(87) International publication number: WO 2007/139217

(57) **Abstract**

A method of producing microcapsule formulations wherein slurries containing imidacloprid suspended in water-immiscible organic solvents are wet-crushed, then, urethane-based macromolecular polymers are added to this, and the resultant mixture is dispersed as liquid drops in water, to form membranes on the interfaces of the liquid drops.

## Description

### Technical Field

The present invention relates to microcapsule formulations encapsulating imidacloprid as an active ingredient in coating membranes, a method of producing the same, and pest controlling agents using the same.

### Background Art

Conventionally, various insecticidal compositions are suggested for preventing feeding damages by injurious insects such as wood harmful insects such as termite and the like, household harmful insects such as cockroach and the like, agricultural and horticultural harmful insects such as cutworm and the like. As active ingredients of insecticidal compositions for controlling these harmful insects, organochlorine insecticides were often used at first, however, high toxicity and residual toxicity were problems. As a result, organochlorine and carbamate insecticides with higher safeness were developed. Thereafter, pyrethroid type insecticides and insect grow controlling agents manifesting lower toxicity for warm-blooded animals are developed and widely-spread.

Recently, new insecticides called neonicotinoid (chloronicotinyl) are developed one after another. Already in Europe, organochlorine and carbamate insecticides are restricted in application due to re-evaluation of toxicity thereof, as a result, neonicotinoid insecticides are gradually penetrating the market. Imidacloprid (non-patent document 1) is a typical neonicotinoid insecticide, and is highly evaluated in every county in the world as an insecticide for controlling hemipteran insects such as Aphididae (Aphid), Aleyrodidae (whitefly), Aleylodoidae, Delphacidae (Planthopper) and Deltocephalidae Cicadellidae (Leafhopper) and the like, and coleopteran insects such as Scarabaeidae (Scarab), Chrysomelidae (Leaf beatle), and the like. Also in Japan, imidacloprid is widely used for agricultural chemicals intended for the above-described injurious insects, and insecticides intended for termite, and the like.

As insecticidal compositions containing these active ingredients, there are conventionally used oil solutions, emulsion concentrates, suspensions, emulsion formulations, powders, granules, water-dispersible formulations and the like. However, spraying in these conventional formulations had defects of flowing off by rain and pollution of water system environments. As one method for solving such problems, there is a method of coating active ingredients of insecticides by microcapsules. By microcapsulation, active ingredients are enclosed in capsules, thus, decomposition by ultraviolet ray or water hardly occurs, and flowing off into environments can be prevented. There is also a merit of efficient action of active ingredients since active ingredients act by breakage of capsules by contact of the microcapsules with injurious insects. Insecticidal compositions microcapsulating organophosphorus insecticides or pyrethroid insecticides are described in patent document 1, patent document 2 and the like.

In contrast, neonicotinoid-based insecticides have a problem that they cannot be encapsulated successfully in microcapsules by conventional interfacial polymerization methods because of a problem of solubility thereof. For solving this problem, patent document 3 and patent document 4 describe methods in which slurries prepared by suspending active ingredients in water-immiscible organic solvents are wet-crushed, then, enclosed in capsules by forming microcapsule coatings. However, when imidacloprid is tried to be microcapsulated by these methods, it is difficult to attain enclosure in microcapsules with high concentration.
[patent document 1] Japanese Patent No. 1088653
[patent document 2] Japanese Patent No. 1960603
[patent document 3] Japanese Patent Application Laid-Open (JP-A) No. 2000-247821
[patent document 4] Japanese Patent Application Laid-Open (JP-A) No. 2005-170956
[non-patent document 1] Zoku Iyakuhin no Kaihatsu vol. 18, Noyaku no Kaihatsu III, Hirokawa Shoten P. 629-648

### Disclosure of the Invention

The present invention intends to provide microcapsule formulations containing imidacloprid enclosed with high concentration, a method of producing the same, and pest controlling agents using the same.

The present inventors have found that the above-described problem, namely, a problem of existence of imidacloprid with high concentration outside of microcapsules is improved by wet-crushing a slurry containing imidacloprid suspended in water-immiscible organic solvents, then, adding urethane-based macromolecular polymers.

That is, the present invention provides the following 1 to [4].
[1] A method of producing microcapsule formulations wherein a slurry containing imidacloprid suspended in water-immiscible organic solvents is wet-crushed, then, urethane-based macromolecular polymers are added to this, and the resultant mixture is dispersed as liquid drops in water, to form membranes on the interfaces of the liquid drops.
[2] The method of producing microcapsule formulations according to [1], wherein the urethane-based macromolecular polymers are polyester-containing toluyl diisocyanate-modified polyurethane-based macromolecular polymers.
[3] Pest controlling agents comprising microcapsule formulations produced in [1] or [2].
[4] The pest controlling agents according to [3], wherein the pest is termite.

### Modes for Carrying Out the Invention

The water-immiscible organic solvents to be used in the present invention are not particularly limited, and usually, those scarcely dissolving imidacloprid are used. These solvents include aromatic hydrocarbons such as dimethylnaphthalene, dodecylbenzene and the like, esters such as diethyl phthalate, dibutyl adipate, dinonyl adipate, didecyl adipate and the like, petroleum-derived solvents such as kerosene, aerosol kerosene and the like, and vegetable oils such as coconut oil, rapeseed oil, cottonseed oil, castor oil, soy bean oil, corn oil and the like. These solvents may be used singly or in combination of two or more.

As crushing machines used for wet-crushing imidacloprid in these water-immiscible organic solvents, those usually used in producing a flowable formulation can be used. Specifically, crushing machines using media such as bead mill, sand mill, attritor and the like, homomixer, disperser and the like are mentioned.

When slurries thickens during wet-crushing, dispersing agents may be added. As such dispersing agents, pigment wet dispersing agents for paint can be used. Specifically, polycarboxylic acid-based dispersing agents, acrylic copolymer-based dispersing agents, higher fatty ester-based dispersing agents, imidazoline-based dispersing agents and the like. These dispersing agents may be used singly or in combination of two or more.

Microcapsules enclosing imidacloprid with high concentration can be obtained by addition of urethane-based macromolecular polymers to slurries of imidacloprid obtained by wet-crushing, and the subsequent coating membrane formation reaction.

As the urethane-based macromolecular polymers, polyester-containing toluyl diisocyanate-modified polyurethane-based macromolecular polymers are preferable, polyester-containing toluyl diisocyanate-modified polyurethane-based macromolecular polymers having a molecular weight of 1000 to 100000 are more preferable, polyester-containing toluyl diisocyanate-modified polyurethane-based macromolecular polymers having a molecular weight of 2000 to 60000 are further preferable, polyester-containing toluyl diisocyanate-modified polyurethane-based macromolecular polymers having a molecular weight of 2000 to 30000 are particularly preferable, and specifically, Disperbyk-163 (modified polyurethane-based macromolecular polymer, molecular weight: 50,000, manufactured by BYK Japan K.K.), Disperbyk-164 (modified polyurethane-based macromolecular polymer, molecular weight: 2000 to 10000, manufactured by BYK Japan K.K.), and the like are mentioned.

The microcapsule formulations enclosing imidacloprid as an active ingredient of the present invention can be produced by interfacial polymerization methods conventionally suggested. By using these methods, the amount of coating membrane substances, membrane thickness and average particle size can be controlled. As the coating membrane substance of the microcapsule of the present invention, polyurethanes, polyureas, polyamides, polyesters, polycarbonates and the like are mentioned, and polyureas and polyurethanes are preferable.

Thus obtained microcapsule slurry can be used as it is as a pest controlling agent, and for stabilization of the preparation, thickening agents, preservatives, stabilizers, antioxidants, chelating agents, anti-rust agents, defoaming agents, pH regulators and the like may be added. Further, organophosphorus insecticides, pyrethroid insecticides, other neonicotinoid insecticides, insect growth controlling agents, miticides, fungicides, bactericides and the like can be mixed.

Measurement of the average particle size of the microcapsule can be carried out by using, for example, a laser diffraction mode particle size distribution measuring apparatus SALD-2000 (manufactured by Shimadzu Corp.) and the like. The average particle size of the microcapsules in the compositions of the present invention is usually 5 µm or more and 100 µm or less, preferably 10 µm or more and 50 µm or less. When the average particle size of the microcapsules is smaller than 5 µm, a sufficient effect is not manifested since the microcapsules are not broken easily in coming into contact with insects. When the average particle size is over 100 µm, it is difficult to prepare stable microcapsules, and microcapsules are easily broken by operations such as dilution and stirring of the microcapsule compositions, thus, giving a possibility of no manifestation of endurance of the effect as microcapsules.

The compositions of the present invention are effective for controlling a lot of injurious insects such as wood harmful insects, household harmful insects, agricultural and horticultural harmful insects, and the like, and particularly, used preferably in the field requiring residual efficacy. Injurious insects on which the compositions of the present invention are effective include isopteran insects such as Formosan subterranean termite, Reticulitermes speratus (Kolbe), Incisitermes minor Japanese subterranean termite, American common dry-wood termite and the like, dictyopteran insects such as German cockroach, smokybrown cockroach, American cockroach and the like, coleopteran insects such as Lyctidae (brown powder-post beetle), tobacco beetle, skin beetles, scarabs buffalo bugs (buffalo bug), goldbugs (scarab beetle) and the like, lepidopteran insects such as cutworm, cabbage worm, Helicoverpa armigera (corn earworm ), Spodoptera litura (*Spodoptera litura*), and the like, hymenopteran insects such as Camponotus japonicus Mayr (black carpenter ant), Prristonyrmex pungens mayr (*Pristomyrmex pungens*), Athalia rosae ruficornis Jakovlev rufcornis (*Athalia rosae*) and the like, orthopteran insects such as Oxya yezoensis Shiraki, (rice grasshopper), cricket and the like, hemipteran insects, dipteran insects, other insects, and arthropods other than insects such as pill bug, sow bug and the like, and particularly, the compositions are suitable for controlling creeping harmful insects.

By using the imidacloprid microcapsule formulations of the present invention, various pests can be controlled effectively and for a long period of time.

### EXAMPLES

Next, examples and comparative examples of the present invention will be illustrated, but the present invention is not limited to them. Compounding ratios shown below are all by wt%.

### Example 1

80 g of imidacloprid was added to a solution obtained by uniformly mixing 250 g of Vinycizer 40 (diisobutyl adipate, manufactured by Kao Corp.) and 50 g of Soft alkyl benzene (manufactured by Mitsubishi Chemical Corporation), and the mixture was wet-crushed for 30 minutes with glass beads. To this slurry was added 5 g of Disperbyk-164 (described above) and uniformly mixed. To 96 g of the resultant slurry was added 4 g of Sumidule L-75 (aromatic modified polyisocyanate, manufactured by Sumika Bayer Urethane Ltd.) and uniformly mixed to give an oil phase. 3 g of Gohsenol GL-05 (polyvinyl alcohol, manufactured by The Nippon Synthetic Chemical Industry Co., Ltd.) was dissolved in 97 g of ion exchange water to give an aqueous phase. The oil phase solution was added while dispersing the aqueous phase by using T. K. Homomic mixer (manufactured by PRIMIX Corporation) at a rotation of 3500 rpm. 0.5 g of ethylenediamine and 10 g of ion exchange water were uniformly mixed and added while stirring the resultant dispersion at a rotation of 500 rpm. Thereafter, the mixture was carried to a hot water bath of 60°C and reacted for 10 hours while stirring at a rotation of 500 rpm, to obtain a microcapsule dispersion. To this was added 0.2% liquid of KELZAN S (xanthan gum, manufactured by Sansho Co., Ltd.) so that the imidacloprid concentration was 8%, as Example 1. The average particle size thereof was measured to find a value of 25 µm.

### Example 2

120 g of Imidacloprid was added to a solution obtained by uniformly mixing 150 g of Vinycizer 40 (describe above), 150 g of Soft alkyl benzene and 1 g of Homogenol L95 (imidazoline surfactant, manufactured by Kao Corporation), and the mixture was wet-crushed for 30 minutes with glass beads. To this slurry was added 5 g of Disperbyk-164 (described above) and uniformly mixed. To 96 g of the resultant slurry was added 4 g of Sumidule L-75 (described above) and uniformly mixed to give an oil phase. 3 g of Gohsenol GL-05 (described above) was dissolved in 97 g of ion exchange water to give an aqueous phase. The oil phase solution was added while dispersing the aqueous phase by using T. K. Homomic mixer at a rotation of 3500 rpm. 0.5 g of ethylenediamine and 10 g of ion exchange water were uniformly mixed and added while stirring the resultant dispersion at a rotation of 500 rpm. Thereafter, the mixture was carried to a hot water bath of 60°C and reacted for 10 hours while stirring at a rotation of 500 rpm, to obtain a microcapsule dispersion. To this was added 0.2% liquid of KELZAN S (described above) so that the imidacloprid concentration was 10%, as Example 2. The average particle size thereof was measured to find a value of 25 µm.

### Comparative Example 1

120 g of imidacloprid was added to a solution obtained by uniformly mixing 250 g of Vinycizer 40 (describe above), 50 g of Soft alkyl benzene and 1 g of Homogenol L95 (described above), and the mixture was wet-crushed for 30 minutes with glass beads. To 96 g of this slurry was added 4 g of Sumidule L-75 (described above) and uniformly mixed to give an oil phase. 3 g of Gohsenol GL-05 (described above) was dissolved in 97 g of ion exchange water to give an aqueous phase. The oil phase solution was added while dispersing the aqueous phase by using T. K. Homomic mixer at a rotation of 3500 rpm. 0.5 g of ethylenediamine and 10 g of ion exchange water were uniformly mixed and added while stirring the resultant dispersion at a rotation of 500 rpm. Thereafter, the mixture was carried to a hot water bath of 60°C and reacted for 10 hours while stirring at a rotation of 500 rpm, to obtain a microcapsule dispersion. To this was added 0.2% liquid of KELZAN S (described above) so that the imidacloprid concentration was 10%, as Comparative Example 1. The average particle size thereof was measured to find a value of 25 µm.

### Comparative Example 2

120 g of imidacloprid was added to a solution obtained by uniformly mixing 150 g of Vinycizer 40 (describe above), 150 g of Soft alkyl benzene and 1 g of Homogenol L95 (described above), and the mixture was wet-crushed for 30 minutes with glass beads. To this slurry was added 5 g of Disperbyk-109 (1-hydroxyethyl-2-alkenylimidazoline, manufactured by BYK Japan K.K.) and uniformly mixed. To 96 g of the resultant slurry was added 4 g of Sumidule L-75 (described above) and uniformly mixed to give an oil phase. 3 g of Gohsenol GL-05 (described above) was dissolved in 97 g of ion exchange water to give an aqueous phase. The oil phase solution was added while dispersing the aqueous phase by using T. K. Homomic mixer at a rotation of 3500 rpm. 0.5 g of ethylenediamine and 10 g of ion exchange water were uniformly mixed and added while stirring the resultant dispersion at a rotation of 500 rpm. Thereafter, the mixture was carried to a hot water bath of 60°C and reacted for 10 hours while stirring at a rotation of 500 rpm, to obtain a microcapsule dispersion. To this was added 0.2% liquid of KELZAN S (described above) so that the imidacloprid concentration was 10%, as Comparative Example 2. The average particle size thereof was measured to find a value of 25 µm.

### Comparative Example 3

120 g of imidacloprid was added to a solution obtained by uniformly mixing 150 g of Vinycizer 40 (describe above), 150 g of Soft alkyl benzene and 1 g of Homogenol L95 (described above), and the mixture was wet-crushed for 30 minutes with glass beads. To this slurry was added 5 g of Flowlen G-700 (carboxylic acid-containing modified macromolecular copolymer, manufactured by Kyoeisha Chemical Co., Ltd.) and uniformly mixed. To 96 g of the resultant slurry was added 4 g of Sumidule L-75 (described above) and uniformly mixed to give an oil phase. 3 g of Gohsenol GL-05 (described above) was dissolved in 97 g of ion exchange water to give an aqueous phase. The oil phase solution was added while dispersing the aqueous phase by using T. K. Homomic mixer at a rotation of 3500 rpm. 0.5 g of ethylenediamine and 10 g of ion exchange water were uniformly mixed and added while stirring the resultant dispersion at a rotation of 500 rpm. Thereafter, the mixture was carried to a hot water bath of 60°C and reacted for 10 hours while stirring at a rotation of 500 rpm, to obtain a microcapsule dispersion. To this was added 0.2% liquid of KELZAN S (described above) so that the imidacloprid concentration was 10%, as Comparative Example 3. The average particle size thereof was measured to find a value of 25 µm.

### Test Example 1 (imidacloprid extramembrane concentration measurement)

To each 5 g of the preparations in Examples 1 and 2 and Comparative Examples 1 to 3 were added ion exchange water to give a total amount of 100 ml. After hallowing to stand stall for 24 hours, these diluted solutions were filtrated through a membrane filter (fine pore diameter: 0.45 µm), and the filtrates were analyzed by high performance liquid chromatography to quantify imidacloprid. The results are shown in Table 1.

**Table 1**

| Sample | Extramembrane concentration (wt%) |
|---|---|
| Example 1 | 0.52 |
| Example 2 | 0.36 |
| Comparative Example 1 | 5.89 |
| Comparative Example 2 | 6.50 |
| Comparative Example 3 | 7.96 |

It was suggested that in Examples 1 and 2 corresponding to the compositions of the present invention, the concentrations of imidacloprid present outside of membranes are significantly lower, and imidacloprid is enclosed with higher concentration in microcapsules, as compared with Comparative Examples 1 to 3.

### Test Example 2 (Efficacy on termite)

plastic schales having a diameter of 9 cm was bedded with 32 g of sand. Examples 1 and 2 and an imidacloprid flowable preparation were diluted with ion-exchanged water at dilution magnifications shown in Table 1, and 8 ml of them were used to treat the sand from upper side. Immediately after treatment, 20 Formosan subterranean termite workers were released, and 24 hours after free run, living was checked, and the mortality was calculated. The experiment was repeated three times. The results are shown in Table 2.

**Table 2**

| Sample | Dilution magnification | Concentration of active ingredient in soil | Mortality |
|---|---|---|---|
| Example 1 | 16 | 0.1% | 100% |
| Example 2 | 20 | 0.1% | 100% |
| Imidacloprid flowable | 40 | 0.1% | 100% |

The compositions obtained in Examples 1 and 2 showed high insecticidal activity on Formosan subterranean termite like the imidacloprid flowable preparation.

### Industrial Applicability

The imidacloprid microcapsule formulations according to the present invention shows high controlling efficacy and residual efficacy on a lot of injurious organisms including termite, and can be used as pest controlling agents.

## Claims

1. A method of producing microcapsule formulations wherein slurries containing imidacloprid suspended in water-immiscible organic solvents are wet-crushed, then, urethane-based macromolecular polymers are added to this, and the resultant mixture is dispersed as liquid drops in water, to form membranes on the interfaces of the liquid drops.

2. The method of producing microcapsule formulations according to Claim 1, wherein the urethane-based macromolecular polymers are polyester-containing toluyl diisocyanate-modified polyurethane-based macromolecular polymers.

3. Pest controlling agents comprising microcapsule formulations produced in Claim 1 or 2.

4. The pest controlling agents according to Claim 3, wherein the pest is termite.
